# EUROPEAN PATENT APPLICATION

(11) **EP 1 788 066 A2**
(43) Date of publication of application: **23.05.2007**
(21) Application number: 06255943.0
(22) Date of filing: 21.11.2006
(51) Int. Cl.: C10M 145/14

(54) **Acrylic synthetic lubricant**

(30) Priority: 22.11.2005 US 739985 P
(71) Applicant: Rohm and Haas Company, Philadelphia, PA 19106-2399 (US)
(72) Inventor: Hsu, Shih-Ying, Chalfont, Pennsylvania 18914 (US); Lau, Willie, Lower Gwynedd, Pennsylvania 19002 (US); Sheng, Miao-Hsun Li, Lower Gwynedd, Pennsylvania 19002 (US)
(74) Representative: Buckley, Guy Julian

(57) **Abstract**

A synthetic lubricant comprising a relatively low-molecular-weight acrylic polymer.

## Description

This invention relates to a synthetic lubricant comprising a synthetic acrylic polymer.

Synthetic lubricants of various types are commonly used in the petroleum industry to provide high performance beyond the reach of lubricants based on mineral oils. Polyolefins, alkylaromatics and polyol esters are typical examples of materials that have been used for this purpose. For example, U.S. Pat. No. 5,691,284 discloses copolymers of 1-alkenes and (meth)acrylic acid esters. However, such copolymers can be difficult to produce, and this reference provides no guidance as to which acrylic polymers might have desirable properties as synthetic lubricants.

The problem addressed by the present invention is the need for improved synthetic lubricants.

### STATEMENT OF INVENTION

The present invention provides a synthetic lubricant comprising an acrylic polymer having: (a) Mₙ at least 1,000 and no more than 20,000; (b) residues of at least one alkyl (meth)acrylate monomer having a C₂-C₂₂ alkyl group; and (c) a terminal reactive group derived from a radical chain-transfer agent.

### DETAILED DESCRIPTION

Percentages are weight percentages and temperatures are in °C, unless specified otherwise.

As used herein the term "(meth)acrylic" refers to acrylic or methacrylic, and "(meth)acrylate" refers to acrylate or methacrylate. "Acrylic monomers" include acrylic acid (AA), methacrylic acid (MAA), esters of AA and MAA, acrylamide (AM), methacrylamide (MAM), and derivatives of AM and MAM. Esters of AA and MAA include, but are not limited to, alkyl and hydroxyalkyl esters, e.g., methyl methacrylate (MMA), ethyl methacrylate (EMA), butyl methacrylate (BMA), hydroxyethyl methacrylate (HEMA), hydroxyethyl acrylate (HEA), isobornyl methacrylate (IBOMA), methyl acrylate (MA), ethyl acrylate (EA), butyl acrylate (BA), and longer chain alkyl (meth)acrylates such as ethylhexyl acrylate (EHA), lauryl acrylate (LA), lauryl methacrylate (LMA), cetyl methacrylate (CEMA), and stearyl methacrylate (SMA). The term "(meth)acrylamide" refers to acrylamide (AM) or methacrylamide (MAM). Derivatives of (meth)acrylamide include, but are not limited to, alkylsubstituted (meth)acrylamides, e.g., N,N-dimethyl acrylamide, N,N-dipropyl acrylamide, t-butyl acrylamide, N-octyl acrylamide, and longer chain alkyl (meth)acrylamides such as N-lauryl methacrylamide, N-stearyl methacrylamide.

The term "acrylic polymers" refers to polymers of acrylic monomers, and copolymers comprising at least 50% of acrylic monomers and (meth)acrylamide monomers. Preferably, acrylic polymers have at least 75% of monomer residues derived from (meth)acrylic acid or (meth)acrylate or (meth)acrylamide monomers, more preferably at least 85%, and most preferably at least 95%. Preferably, the remaining monomer units are derived from styrene monomers, e.g., styrene or α-methylstyrene. Preferably, acrylic polymers are substantially free of residues of aliphatic olefin monomers. Preferably, acrylic polymers are substantially free of residues of monomers other than acrylic monomers and styrene.

An "alkyl" group is a substituted or unsubstituted hydrocarbyl group having from one to twenty-two carbon atoms in a linear, branched or cyclic arrangement. Alkyl groups optionally have one or more double or triple bonds. Substitution on alkyl groups of one or more halo, trialkylsilyl, hydroxy, alkoxy, nitrogen-containing (e.g., amino substituted by up to two alkyl groups), phosphorus-containing (e.g., phosphonate, phosphite or phosphate) groups is permitted; alkoxy or trialkylsilyl groups may in turn be substituted by one or more halo substituents. Preferably, alkyl groups have no alkoxy or halo substituents other than fluoro substituents, and most preferably, alkyl groups are saturated and unsubstituted. Preferably, alkyl groups are straight or branched chain aliphatic alkyl groups. It is understood that the alkyl groups may be either of synthetic or of natural origin and, in the latter case particularly, may contain a range of chain lengths. For example, naturally sourced stearic acid, even of commercially pure quality may contain only about 90% of stearic chains, up to about 7% of palmitic chains and a proportion of other chains and lower quality products may contain substantially less stearic acid. It is intended herein that reference to the chain length of such groups is to the predominant chain length which is present as more than 50%, preferably in more than 75%, of the chains. When an alkyl group is substituted, the resultant acrylic polymer can be used as an additive, preferably in petroleum products. For example, up to 20% of the polymer can be added to a lubricant or fuel as a fire retardant, carrier fluid for gasoline and diesel detergents, lubricity additive, antiwear/EP additive, plasticizer, compatibilizer, etc.

In one embodiment of the invention, the acrylic polymer has a T_{g} no greater than 40°C, alternatively no greater than 30°C, alternatively no greater than 20°C, alternatively no greater than 0°C, alternatively no greater than -20°C, alternatively no greater than -40°C; preferably, the acrylic polymer has a T_{g} at least -100°C. In one embodiment of the invention, the acrylic polymer has a total of no more than 50% residues derived from among styrene monomers, methacrylamide, methacrylamide monomers, alkyl methacrylate monomers, and methacrylic acid, alternatively no more than 30%, alternatively no more than 20%. In one embodiment of the invention, the acrylic polymer is substantially free of methacrylamide and methacrylamide monomers. In one embodiment of the invention, the acrylic polymer is substantially free of residues derived from styrene monomers, methacrylamide, methacrylamide monomers, methacrylate monomers, and methacrylic acid.

In one embodiment of the invention, the acrylic polymer has less than 5% of monomer residues containing carboxylic acid groups or amino groups, alternatively less than 2%, alternatively less than 1%, alternatively less than 0.5%. Carboxylic acid groups would be present on, for example, acrylic acid residues and methacrylic acid residues.

In one embodiment of the invention, the acrylic polymer has residues of at least one alkyl (meth)acrylate having a C₄-C₂₂ alkyl group. In another embodiment of the invention, the acrylic polymer has at least 50% of residues derived from C₄-C₂₂ alkyl (meth)acrylates, or alternatively from C₄-C₂₂ alkyl acrylates. In this embodiment, the acrylic polymer also may contain residues of C₁-C₃ alkyl acrylates, as well as residues of other monomers described herein. In one embodiment, the acrylic polymer has at least 75% of residues derived from C₄-C₂₂ alkyl (meth)acrylates, preferably C₄-C₂₂ alkyl acrylates. In one embodiment of the invention, the acrylic polymer has at least 20% of residues derived from C₈-C₂₂ alkyl (meth)acrylates, alternatively at least 30%; preferably the C₈-C₂₂ alkyl (meth)acrylates are C₈-C₂₂ alkyl acrylates.

In one embodiment of the invention, the acrylic polymer has Mₙ at least 1,500, alternatively at least 2,000, alternatively at least 3,000; preferably the acrylic polymer has Mₙ no more than 10,000, alternatively no more than 8,000, alternatively no more than 7,000, alternatively no more than 6,000.

A terminal "reactive" group is one which can react with isocyanates, diisocyanates, nucleophilic reagents (e.g., amines, alcohols and thiols) or Mannich reagents. In one embodiment of the invention, a terminal haloalkyl group on the acrylic polymer has been functionalized with an amine, alcohol or thiol, preferably one containing a C₂-C₂₀ alkyl group. In one embodiment of the invention, a terminal hydroxy, thiol or alkyl sulfide group on the acrylic polymer has been functionalized with a hydroxy- or sulfide-reactive reagent to form a terminal functional group. Reagents suitable for such functionalization include, but are not limited to, isocyanates, diisocyanates, Mannich reagents, including formaldehyde/amine and formaldehyde/alcohol. Isocyanates and diisocyanates may be aliphatic or aromatic, and will result in a terminal alkyl or aryl carbamate or thiocarbamate group. In the case of diisocyanates, terminal hydroxy or thiol groups from at least two acrylic polymer chains could react with the diisocyanate, causing the chains to be linked together,

The acrylic polymer is produced in a solvent or emulsion process, using a radical chain transfer agent RXH, wherein X is O or S, and R is C₂-C₂₀ alkyl; or a radical chain transfer agent which is a C₁-C₃ perhaloalkane, preferably a perchloroalkane. Preferred chain transfer agents include, e.g., n-dodecyl mercaptan (nDDM), CCl₄ and isopropanol. Polymerization temperatures can range from 25°C to 200°C, although the preferred range is from 25°C to 150°C.

This invention also includes a method for recovering monomers from the acrylic polymer after use, typically by heating the acrylic polymer to 400-600°C to induce depolymerization, depending on the nature and composition of the acrylic polymer, followed by condensing and recovering the acrylic monomers. Addition of hydrogen peroxide also can induce depolymerization when the terminal group is hydroxy, thiol or alkyl sulfide. Known processes for depolymerization of acrylic monomers are suitable for recovering monomers from the acrylic polymer of this invention. For example, such processes are disclosed in U.S. Pat. No. 6,469,203 and PCT Application No. WO 2004/106277.

### EXAMPLES

### List of Polymers

| **Entry** | **Polymer Composition** |
|---|---|
| **1** | 70 BA/30 LA//20 nDDM |
| **2A** | 100 BA//10 nDDM |
| **2B** | 100 BA//5.5 nDDM |
| **2C** | 100 BA//3.36 nDDM |
| **3A** | 100 BA |
| **3B** | 100 BA |

| | |
|---|---|
| Note: monomer percentages are calculated exclusive of chain transfer agents, which are listed after the symbol "//" and calculated as a percentage of total monomer amount before the symbol. | |

**TABLE 1: ABBREVIATIONS INTRODUCED IN THE EXAMPLES**

| | |
|---|---|
| Surfactant | Ethoxylated C6 to C18 alkyl ether sulfate having from 1 to 40 ethylene oxide groups per molecule (30% active in water) |
| Vazo^{™}-67 | 2,2'-azobis(methylbutyrononitrile) |
| Trigonox^{™} 125-C75 | t-Amyl peroxypivalate, 75% in mineral spirits |
| Me-β-CD | Methyl-β-Cyclodextrin (BETA W7 M1.8), Wacker Chemicals (USA), Inc., (50.8% active in water) |

### Example 1: Acrylic Oil by Emulsion Polymerization

The emulsion polymerizations in this example were carried out in a 5-liter round bottom flask with four necks equipped with a mechanical stirrer, temperature control device, condenser, monomer and initiator feed lines and a nitrogen inlet.

Deionized water (1100 g), Methyl-β-cyclodextrin (59.2 g) and surfactant (18.8) were introduced into the reaction flask at room to form a reaction mixture. The contents were heated to 85°C while stirring under nitrogen sweep. A monomer emulsion of deionized water (625 g), surfactant (14.1 g), monomers BA (1050 g, LA (450 g), nDDM (300 g) was prepared separately.

At 85°C, 5.0 grams of ammonium persulfate in 25 grams of water were added to the reaction mixture. An acrylic dispersion (137.6 g at 45% solids) was added as a seed polymer. After the temperature stabilized at 85°C, the monomer emulsion was fed into the reaction mixture over 100 minutes together with an ammonium persulfate solution (1.0 gram in 100 grams of water). At the end of the monomer emulsion feed, the reaction mixture was held at 85°C for 20 minutes, cooled to 75°C, chased with t-butyl hydroperoxide and isoascorbic acid (0.51 g in 10 g of water and 0.27 g in 25 g of water, respectively) in the presence of Fe₂SO₄ (4 g of 0.15% solution). An addition chase was carried out at 60°C.

The acrylic oil was isolated from the dispersion upon evaporation of the water. The slightly hazy oil was filtered through zeolite to obtain a clear oil.

### Example 2A, 2B, 2C: Acrylic Oil by Solution Polymerization In Toluene

The solution polymerizations in this example were carried out in a 3-liter round bottom flask with four necks equipped with a mechanical stirrer, temperature control device, condenser, monomer and initiator feed lines and a nitrogen inlet.

Toluene (400 g) was introduced into the reaction flask at room temperature. The content was heated to 120°C under nitrogen sweep. A monomer mixture was prepared containing 1000 g of BA and nDDM (100 g, 55 g and 33.6 g for 2A, 2B and 2C respectively) at room temperature. 73.5 g of the monomer mixture was charged into the reaction flask, followed by an initiation solution containing 1.64 g of Vazo™-67 in 10.5 g of toluene. After a 5 minutes hold, the rest of the monomer mixture was fed into the reaction flask over 120 minutes together with an initiator solution containing 10.45 g of Vazo™-67 in 66.8 g of toluene.

The reaction temperature was held at 120°C for 30 minutes after the feed was completed followed by an initiation solution containing 9.8 g of Vazo-67 in 62.6 g of toluene fed over 60 minutes. The temperature was held at 120°C for an additional 30 minutes, cooled to 90°C and held for 60 minutes before cooling to room temperature. The acrylic oils (Example 2A, 2B and 2C) were isolated by stripping toluene using a rotary evaporator to yield clear viscous oils.

### Example 3B: Acrylic Oil by Solution Polymerization in Isopropanol

The solution polymerizations in this example were carried out in a 3-liter round bottom flask with four necks equipped with a mechanical stirrer, temperature control device, condenser, monomer and initiator feed lines and a nitrogen inlet.

Isopropanol (120 g) was introduced into the reaction flask at room temperature. The contents were heated to 82°C under nitrogen sweep. A monomer mixture containing BA (360 g), and isopropanol (20 g) was prepared separately. The monomer mixture was fed into the reaction flask over 120 minutes together with an initiator solution containing Trigonox^{™} 125-C75 (14.4 g) in isopropanol (60 g). The reaction mixture was held at 85°C for 30 minutes at the end of the feed and an initiator solution containing Trigonox^{™} 125-C75 (3.6 g) in isopropanol (20 g) was added. After 30 minutes at 85°C, another initiator solution containing Trigonox^{™} 125-C75 (3.6 g) in isopropanol (20 g) was added. The reaction mixture was held at 85°C for 90 minutes and then cooled to room temperature.

The acrylic oil was isolated by stripping the isopropanol using a rotary evaporator to yield clear viscous oil.

### Example 4: Characterization of Acrylic Oils

Glass transition temperature (Tg) was measured by Differential Scanning Calorimetry (Model 12920, TA Company). Molecular weights were determined by Size Exclusion Chromatography using a polystyrene standard from Polymer Laboratories (PS-1) having a peak average molecular weight ranging from 580 to 7,500,000 with narrow molecular weight distribution. Conversions from polystyrene to PMMA were made using Mark-Houwink constants.

| **Examples** | **Tg (°C)** | **Mw** | **Mn** |
|---|---|---|---|
| 1 | -52.2 | 2449 | 1842 |
| 2A | -66.6 | 4005 | 2775 |
| 2B | -59.2 | 5710 | 3811 |
| 2C | -53.3 | 9425 | 6007 |
| 3A | -53.1 | 9368 | 6106 |
| 3B | -53.6 | 4616 | 3292 |

**Test Results for Acrylic Synthetic Lubricants**

| **Sample** | **Viscosity¹ @ 40 °C, cSt** | **Viscosity¹ @ 100 °C, cSt** | **Viscosity index²** | **Pour point³, °C** | **Flash point⁴, °C, COC** | **OH value⁵, Mg KOH/g** | **Copper corrosion⁶, 100°C/3h** |
|---|---|---|---|---|---|---|---|
| 1 | 117 | 16.8 | 156 | - | - | - | - |
| 2A | 417 | 44 | 161 | -30 | 246 | NA | 1b Max |
| 2B | 1046 | 92 | 175 | -24 | 213 | NA | 1b Max |
| 2C | 2810 | 191 | 185 | -15 | 282 | NA | 1b Max |
| 3A | 3570 | 220 | 183 | -9 | 207 | 3.7 | NA |
| 3B | 1152 | 84 | 151 | -21 | 154 | 14.1 | NA |
| | | | | | | | |
| | | | | | | | |

| | | | | | | | |
|---|---|---|---|---|---|---|---|
| 1. According to ASTM D-445 2. According to ASTM D-2270 3. According to ASTM D-97 4. According to ASTM D-92 5. According to ASTM D-1957 6. According to ASTM D-130 | | | | | | | |

## Claims

1. A synthetic lubricant comprising an acrylic polymer having:
(a) Mₙ at least 1,000 and no more than 20,000;
(b) residues of at least one alkyl (meth)acrylate monomer having a C₂-C₂₂ alkyl group; and
(c) a terminal reactive group derived from a radical chain transfer agent.

2. The lubricant of claim 1 in which said at least one alkyl (meth)acrylate monomer has a C₄-C₂₂ alkyl group.

3. The lubricant of claim 1 in which the acrylic polymer has a T_{g} no greater than 40 °C.

4. The lubricant of claim 1 in which the terminal reactive group is a hydroxy or thiol group.

5. The lubricant of claim 1 in which the acrylic polymer has a total of no more than 50% residues derived from among styrene monomers, methacrylamide, methacrylamide monomers, methacrylate monomers, and methacrylic acid.

6. The lubricant of claim 1 in which the acrylic polymer is substantially free of carboxylic acid groups and amino groups.

7. The lubricant of claim 1 in which the acrylic polymer has Mₙ at least 2000 and no more than 10,000.

8. The lubricant of claim 1 in which the acrylic polymer has at least 50% of residues derived from C₄-C₂₂ alkyl (meth)acrylates.

9. The lubricant of claim 1 in which the acrylic polymer has at least 20% of residues derived from C₈-C₂₂ alkyl acrylates.
